(19) Europäisches Patentamt
European Patent Office
Office européen des brevets

(11) Veröffentlichungsnummer: **0 014 816**
**B1**

(12) # EUROPÄISCHE PATENTSCHRIFT

(45) Veröffentlichungstag der Patentschrift: **24.08.83**

(51) Int. Cl.³: **C 08 F 222/40,**
C 08 G 73/12

(21) Anmeldenummer: **79810186.1**

(22) Anmeldetag: **21.12.79**

(54) **Mehrkernige Polyphenole mit Propenylgruppen und härtbare Mischungen auf Basis von Maleinimiden und propenyl substituierten Phenolen.**

(30) Priorität: **29.12.78 CH 13279/78**

(43) Veröffentlichungstag der Anmeldung:
**03.09.80 Patentblatt 80/18**

(45) Bekanntmachung des Hinweises auf die Patenterteilung:
**24.08.83 Patentblatt 83/34**

(84) Benannte Vertragsstaaten:
**CH DE FR GB**

(56) Entgegenhaltungen:
**DE - A - 2 627 045**

**Journal of American Society (1956), Seite 1709 von A. R. Bader**

(73) Patentinhaber: **CIBA-GEIGY AG**
**Patentabteilung Postfach**
**CH-4002 Basel (CH)**

(72) Erfinder: **Zahir, Sheik Abdul-Cader, Dr.**
**Elsternstrasse 12**
**CH-4104 Oberwil (CH)**
Erfinder: **Wyler, Siegfried**
**Wollmattweg 4**
**CH-4143 Dornach (CH)**

**EP 0 014 816 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

Mehrkernige Polyphenole mit Propenylgruppen und härtbare Mischungen auf Basis von Maleinimiden und propenylsubstituierten Phenolen

Die vorliegende Erfindung betrifft neue, härtbare Mischungen aus Maleinimiden und propenylsubstituierten Phenolen sowie ein Verfahren zur Herstellung von vernetzten Copolymeren aus diesen Mischungen.

In der FR—A 2,316,267 werden wärmehärtbare Mischungen aus Maleinimiden und allylsubstituierten Phenolen offenbart, die zu Formstoffen und Verklebungen mit wertvollen mechanischen Eigenschaften, insbesondere hoher Hitzebeständigkeit, verarbeitet werden können. Diese härtbaren Mischungen weisen aber den Nachteil auf, dass zu ihrer Aushärtung auch bei relativ hohen Temperaturen sehr lange Härtungszeiten benötigt werden. Zwar wird in der genannten FR-Patentschrift ausserdem vorgeschlagen, gegebenenfalls Polymerisationskatalysatoren den härtbaren Mischungen zuzusetzen, doch ist ein Zusatz von Polymerisationskatalysatoren bei Copolymerisationen nicht ganz unproblematisch in Bezug auf die Endeigenschaften der Polymerisate. Beispielsweise können alkalische Polymerisationskatalysatoren bewirken, dass die Maleinimidgruppen vorwiegend homopolymerisieren und die Copolymerisation zurückgedrängt wird und dass somit Stoffe mit unerwünschten Eigenschaften erhalten werden.

Es wurde nun gefunden, dass sich die oben geschilderten Nachteile vermeiden bzw. weitgehend verringern lassen, wenn man anstelle von allylsubstituierten Phenolen solche Phenole einsetzt, die mindestens eine Propenylgruppe im Molekül enthalten. Mischungen aus Maleinimiden und propenylsubstituierten Phenolen weisen den Vorteil auf, dass sie bei höheren Temperaturen schneller gehärtet werden können, und ergeben ausserdem Formstoffe mit guten mechanischen Eigenschaften.

Gegenstand der vorliegenden Erfindung sind somit neue härtbare Mischungen, die dadurch gekennzeichnet sind, dass sie enthalten

a) Maleinimide der allgemeinen Formel I

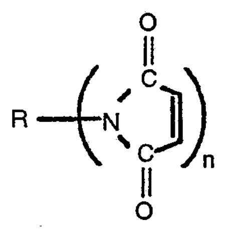

(I)

worin R einen n-wertigen aliphatischen oder aromatischen Rest bedeutet und n für die Zahle 1, 2 oder 3 steht, und

b) ein- oder mehrwertige Phenole, welche im Molekül mindestens eine 1-Propenylgruppe in ortho- oder para-Stellung zur Hydroxylgruppe aufweisen, oder Isomerengemische aus in ortho- oder para-Stellung propenylsubstituierten ein- oder mehrwertigen Phenolen und in ortho- oder para-Stellung allylsubstituierten ein- oder mehrwertigen Phenolen, wobei im Isomerengemisch der Anteil an Propenylgruppen mindestens 5 Aequivalent-%, bezogen auf die Summe der Aequivalente Propenyl- und Allylgruppen, betragen muss und wobei die Mischungen Maleinimide (a) und die propenylsubstituierten Phenole (b) in einem solchen Mengenverhältnis enthalten, dass auf 1 Aequivalent Imidgruppe 0,05 bis 10 Mol, vorzugsweise 0,25 bis 1,5 Mole der propenylsubstituierten Phenole oder des Isomerengemisches kommen.

Bevorzugt sind solche härtbaren Mischungen, die Maleinimide der Formel I enthalten, worin R einen ein- oder zweiwertigen aromatischen Rest und n die Zahl 1 oder 2 bedeuten.

In einer besonderen Ausführungsform enthalten die härtbaren Mischungen Maleinimide der angegebenen Formel worin R für eine unsubstituierte oder durch Methyl oder Halogenatome substituierte Phenylgruppe steht oder worin R insbesondere einen unsubstituierten oder durch Methyl substituierten Phenylenrest oder einen Rest der Formel

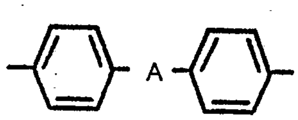

bedeutet, worin A für Isopropylen, Methylen, Sulfonyl, —O— oder —S— steht.

Der Rest R in den Maleinimiden der angegebenen Formel kann einen linearen oder verzweigten Alkyl- oder Alkylenrest mit weniger als 20 Kohlenstoffatomen, einen Phenyl- oder Phenylenrest oder einen Rest der Formel

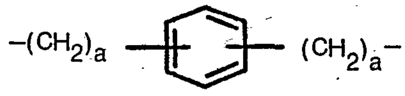

in der a eine ganze Zahl von 1 bis 3 darstellt, bedeuten. Der Rest R kann auch mehrere Phenylenreste umfassen, die direkt oder durch eine einfache Valenzbindung oder durch ein Atom oder eine inerte Gruppe, wie beispielsweise Sauerstoff- oder Schwefelatome, Alkylengruppen mit 1 bis 3 Kohlenstoffatomen oder über folgende Gruppen —CO—, $—SO_2—$, —NR'— (R'=Alkyl), —N=N—, —CONH—, —COO—, $O{=}P(O—)_3$, $S{=}P(O—)_3$ verbunden sind.

Ausserdem können die Phenyl- oder Phenylreste durch Methylgruppen oder Halogenatome, wie Fluor, Chlor oder Brom, substituiert sein.

Die Maleinimide der angegebenen Formel stellen eine bekannte Verbindungsklasse dar und können durch Anwendung der in der US-Patentschrift 3,522,271 und in der GB-Patentschrift 1 137 592 beschriebenen Methoden durch Umsetzen der entsprechenden Amine oder Polyamine mit dem Maleinsäureanhydrid in einem polaren Lösungsmittel und in Gegenwart eines Katalysators hergestellt werden. Phosphorhaltige Maleinimide und deren Herstellung werden ferner in der belgischen Patentschrift 806 071 beschrieben.

Als spezielle Beispiele für Maleinimide, welche in den erfindungsgemässen Mischungen enthalten sein können, seien genannt:

N,N'-Aethylen-bis-maleinimid,
N,N'-Hexamethylen-bis-maleinimid,
N,N'-m-Phenylen-bis-maleinimid,
N,N'-p-Phenylen-bis-maleinimid,
N,N'-4,4'-Diphenylmethan-bis-maleinimid,
N,N'-4,4'-3,3'-Dichlor-diphenylmethan-bis-maleinimid,
N,N'-4,4'-Diphenyläther-bis-maleinimid,
N,N'-4,4'-Diphenylsulfon-bis-maleinimid,
N,N'-m-Xylylen-bis-maleinimid,
N,N'-p-Xylylen-bis-maleinimid,
N,N'-4,4'-2,2-Diphenylpropan-bis-maleinimid,
das N,N'-Bis-maleinimid des 4,4'-Diamino-triphenylphosphats,
das N,N'-Bis-maleinimid des 4,4'-Diamino-triphenylphosphits,
das N,N'-Bis-maleinimid des 4,4'-Diamino-triphenylthiophosphats,
das N,N',N''-Trismaleinimid des Tris-(4-aminophenyl)-phosphats,
das N,N',N''-Trismaleinimid des Tris-(4-aminophenyl)-phosphits und
das N,N',N''-Trismaleinimid des Tris-(4-aminophenyl)-thiophosphats.

Man kann auch Mischungen von zwei oder mehreren dieser Malein- oder Poly-maleinimide verwenden.

Als Mischungskomponente (b) eignen sich gut die propenylsubstituierten Phenole der Formel II

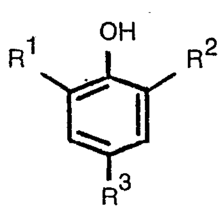

(II)

worin $R^1$, $R^2$ und $R^3$ je ein Wasserstoffatom, Allyl- oder Propenylgruppe bedeuten, wobei mindestens einer der Substituenten $R^1$ bis $R^3$ für die Propenylgruppe steht, der Formel III

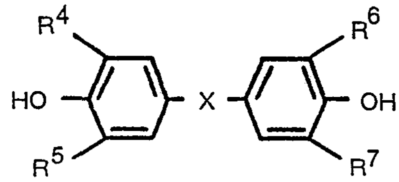

(III)

worin $R^4$, $R^5$, $R^6$ und $R^7$ je ein Wasserstoffatom, Allyl- oder Propenylgruppe bedeuten, wobei mindestens einer der Substituenten $R^4$ bis $R^7$ für die Propenylgruppe steht, und X Isopropylen, Methylen, Sulfonyl, —O— oder —S— bedeutet, oder der Formel IV

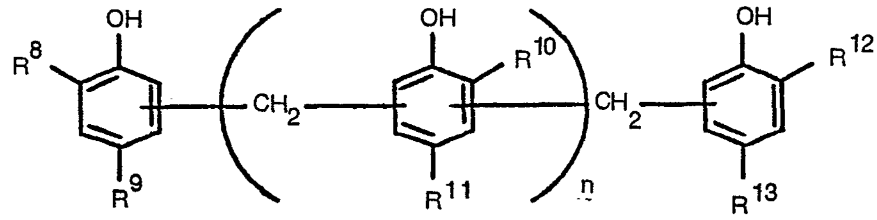

(IV)

worin $R^8$, $R^9$, $R^{10}$, $R^{11}$, $R^{12}$ und $R^{13}$ je ein Wasserstoffatom, Alkyl mit 1 bis 4 C-Atomen, Allyl oder Propenyl stehen, wobei mindestens einer der Substituenten $R^8$ bis $R^{13}$ für die Propenylgruppe steht, und n einen Wert von 0 bis 10 darstellt.

Vorzugsweise verwendet man als Mischungskomponente (b) die propenylsubstituierten Phenole der Formel III, insbesondere solche, worin in der Formel III $R_4$ und $R_6$ je eine Propenylgruppe bedeuten $R^5$ und $R^7$ je ein Wasserstoffatom bedeuten und X für Isopropylen, Methylen oder —O— steht.

Als Mischungskomponente (b) sind auch die Isomerengemische aus propenyl- und allylsubstituierten ein- und mehrwertigen Phenolen geeignet, wobei im Isomerengemisch der Anteil an Propenylgruppen vorzugsweise mindestens 10 Aequivalent-%, insbesondere mindestens 20 Aequivalent-%, bezogen auf die Summe der Aequivalente Propenyl- und Allylgruppen, betragen muss.

Von den Isomerengemischen werden bevorzugt Mischungen aus propenyl- und allylsubstituierten Phenolen der Formel III eingesetzt, insbesondere solche, die durch partielle Isomerisierung von allylsubstituierten Phenolen der Formel

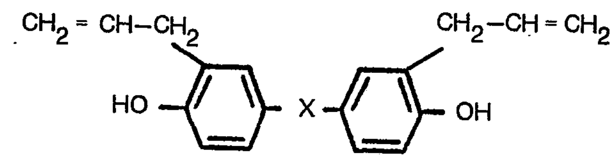

worin X für Isopropylen, Methylen oder —O— steht, erhalten werden.

Die propenylsubstituierten Phenole der Formel II sind bekannt und können nach dem im "Journal of American Chemical Society" (1956), Seite 1709 bis 1713, beschriebenen Verfahren durch alkalische Isomerisation der entsprechenden allylsubstituierten Phenole erhalten werden, indem man zum Beispiel 2,6-Diallylphenol in Gegenwart von mindesten gleichen Mengen Kalilauge solange auf über 100°C erhitzt, bis alle Allylgruppen zu Propenylgruppen isomerisiert sind und das entsprechende 2,6-Dipropenylphenol entstanden ist. Bei Verwendung von weniger als der gleichen Menge Kalilauge, durch Anwendung von geringeren Isomerisationstemperaturen oder durch Abbrechen der Isomerisationsreaktion erreicht man, dass die Isomerisation nur partiell verläuft und erhält somit die aus propenyl- und allylsubstituierten Phenolen bestehenden Isomerengemische. Man kann natürlich auch Isomerengemische herstellen, indem man reine Propenylphenole mit Allylphenolen mischt.

Die propenylsubstituierten Phenole der Formeln III und IV sind bisher in der Literatur noch nicht beschrieben worden und können ebenfalls durch das oben genannte alkalische Isomerisationsverfahren hergestellt werden.

Die beim Isomerisationsverfahren als Ausgangsverbindungen eingesetzten allylsubstituierten Phenole werden bekanntlich durch Verätherung der phenolischen Hydroxylgruppe mit Allylchlorid und anschliessende Claisen-Umlagerung erhalten. Durch Wiederholung dieser Umsetzungs- und Umlagerungsreaktion werden die entsprechenden Polyallylphenole erhalten.

Die bisher in der Literatur noch nicht beschriebenen propenylsubstituierten zweiwertigen Phenole der Formeln III und IV stellen harzartige Verbindungen dar, die sich im Vergleich zum vorbekannten 2,6-Dipropenylphenol in Mischungen mit Maleinimiden besser als Pressmassen und Sinterpulver verarbeiten lassen. Ausserdem weisen die neuen Verbindungen den Vorteil auf, dass sie nicht mit einem unangenehmen Geruch, der das Arbeiten mit dem vorbekannten 2,6-Dipropenylphenol erschwert, behaftet sind.

Die erfindungsgemässen härtbaren Mischungen können auch mehrere, verschiedene Maleinimide der angegebenen Formel sowie auch voneinander verschieden valente Maleinimide enthalten.

Die Härtung der erfindungsgemässen Mischungen zu unlöslichen, vernetzten Copolymerisationsprodukten erfolgt durch Erwärmen der gegebenenfalls Inhibitoren enthaltenden Mischungen auf Temperaturen von 50° bis 250°C, vorzugsweise bei Temperaturen zwischen 100 und 250°C, je nachdem, ob die Polymerisationsreaktion in der Schmelze oder in Lösungsmitteln oder in Gegenwart von Katalysatoren oder Inhibitoren durchgeführt wird.

Soweit die Härtung in Schmelzfluss durchgeführt wird, sind Temperaturen von 100 bis 250°C besonders gut geeignet, wobei die Härtung vorteilhafterweise bei Temperaturen unterhalb von 180°C begonnen wird. In Lösung sind dagegen auch niedrigere Temperaturen von beispielsweise 50° bis 150°C anwendbar.

Die Härtung der erfindungsgemässen Mischungen erfolgt bevorzugt in der Schmelze oder teilweise in der Schmelze und teilweise in der festen Phase.

Als geeignete Lösungsmittel sind beispielsweise folgende Substanzen aufzuzählen:

Aceton, Methyläthylketon, Aethylenglykolmonomethyläther, Aethylenglykol, Chloroform, Dioxan, Tetrahydrofuran, Dimethylformamid, Tetramethylharnstoff und N-methylpyrrolidon.

Je nach Anwendungszweck oder Verarbeitung können den erfindungsgemässen Mischungen auch Inhibitoren, wie Hydrochinon, Phenothiazin oder Indol, zugesetzt werden. Die Konzentration an Inhibitoren im Reaktionsgemisch beträgt in üblicher Weise zwischen 0,1 bis 5 Gew.-%, bezogen auf die gesamte Menge der reagierenden Komponenten. Es ist auch möglich, aus den erfindungsgemässen Mischungen erst ein weiteres Präpolymer herzustellen, indem man die homogen gemischten, gegebenenfalls fein vermahlenen Ausgangsmaterialien zeitweise auf 50—150°C erhitzt, so dass ein noch thermisch verformbares, teilweise lösliches Produkt entsteht. Dieses Präpolymer muss gegebenenfalls wieder zu einem verarbeitbaren Pulver vermahlen werden. Die Präpolymerisation kann auch durch Erhitzen einer Lösung oder Suspension der Ausgangsmaterialien erfolgen. Dazu kommen Substanzen in Frage, die mit den Ausgangsmaterialien nicht reagieren und die sie gewünschten Falles genügend lösen. Solche Flüssigkeiten sind zum Beispiel die bereits oben erwähnten organischen Lösungsmittel.

Es ist weiterhin möglich das Präpolymer in der Weise herzustellen, indem man zunächst einen der beiden Reaktionspartner im stärken Unterschuss zusetzt und durch Erhitzen der so hergestellten Mischung auf 50 bis 150°C ein noch schmelzbares, genügend lösliches Präpolymer herstellt. Dieses Produkt kann dann später nach Zusatz der noch fehlenden Menge der zunächst im Unterschuss vorhandenen Komponente bei der Endverarbeitung endgültig ausgehärtet werden.

Die erfindungsgemässen härtbaren Mischungen finden ihren Einsatz vor allem auf den Gebieten der Elektrotechnik und der Laminierverfahren. Sie können in jeweils dem speziellen Anwendungszweck angepasster Formulierung, im ungefüllten oder gefüllten Zustand, gegebenenfalls in Form von Lösungen oder Dispersionen, als Tauchharze, Giessharze, Imprägnierharze, Bindemittel, Laminierharze, Pressmassen und Schaumharze verwendet werden.

Die Herstellung der vernetzten, unschmelzbaren Copolymerisationsprodukte erfolgt in der Regel unter gleichzeitiger Formgebung zu Formkörpern, Flächengebilden, Laminaten, Verklebungen. Dabei können den härtbaren Massen die in der Technologie der härtbaren Kunststoffe gebräuchlichen Zusätze wie Füllstoffe, Weichmacher, Pigmente, Farbstoffe, Formtrennmittel, flammhemmende Stoffe zugesetzt werden. Als Füllstoffe konnen zum Beispiel Glasfasern, Glimmer, Quarzmehl, Kaolin, kolloidales Siliziumdioxid oder Metallpulver verwendet werden, als Formtrennmittel kann zum Beispiel Kalziumstearat dienen. Die Formgebung kann nach dem Heisspressverfahren durch kurzes, rasches Erhitzen in einer Presse auf vorzugsweise 170—250°C bei einem Druck von 9,8—1962.10$^4$ N/m$^2$ erfolgen. Die dabei entstehenden Formkörper besitzen bereits eine genügende mechanische Festigkeit, so dass sie ausserhalb der Presse in einem Ofen bei 200—280°C vollständig ausgehärtet werden können.

Wird aus den härtbaren Mischungen zuerst ein Präpolymer hergestellt, so kann dieses, zu einem feinen Pulver vermahlen, nach dem Wirbelsinterverfahren als Beschichtung aufgebracht werden.

Eine Lösung oder Suspension des Präpolymeren in einem geeigneten Lösungsmittel kann zur Herstellung von Laminaten dienen, indem man poröse Flächengebilde wie Gewebe, Fasermatten oder Faservliese, besonders Glasfasermatten oder Glasfasergewebe, mit Lösungen oder Suspensionen imprägniert und das Lösungsmittel durch einen Trocknungsvorgang entfernt. Die weitere Härtung erfolgt in einer Presse bei vorzugsweise 170—250°C und 9,8—1962.10$^4$ N/m$^2$ Druck. Es ist auch möglich, die Laminate in der Presse nur vorzuhärten und die so erhaltenen Produkte in einem Ofen bei 200—280°C bis zum Erreichen optimaler Gebrauchseigenschaften nachzuhärten.

Beispiel A

Herstellung von 2,2-Bis-[3-(1-propenyl)-4-hydroxyphenyl]-propan

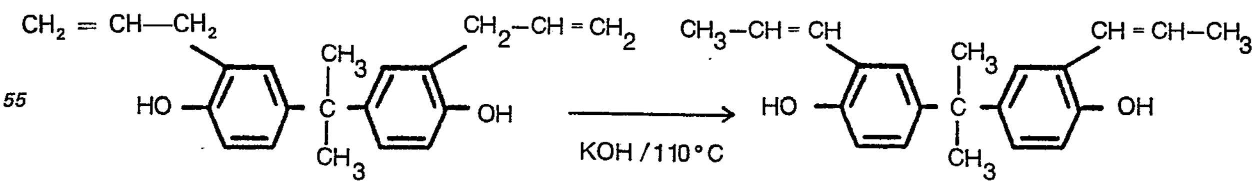


(A$_1$) (A$_2$)

Unter Rühren werden 400 ml Methanol langsam zu einer Mischung aus 3 Mol 2,2 - Bis - (3 - allyl - 4 - hydroxyphenyl) - propan (A$_1$) und Kaliumhydroxid-Kügelchen zugegeben. Danach wird die Mischung sorgfältig auf 110°C unter Abdestillieren von 116 ml Methanol erhitzt. Anschliessend wird die Reaktionslösung unter Rückflusskühlung noch weitere 6 Stunden auf 110°C gehalten. Dann wird die Reaktionslösung gekühlt, mit konz. HCl neutralisiert und mit Methylenchlorid extrahiert. Der Extrakt wird

getrocknet und vollständig zur Trockne eingedämpft. Man erhält im wesentlichen reines 2,2 - Bis - [3 - (1 - propenyl) - 4 - hydroxyphenyl] - propan ($A_2$), das bei Raumtemperatur eine sehr hochviskose, gelbliche Flüssigkeit darstellt. Durch Mikroanalyse, H—NMR—, MS— und UV-Spektroskopie sowie mittels Gelpermeationschromatographie wird die Strukturformel $A_2$ bestätigt.

Beispiel B

Herstellung von Isomerengemischen durch partielle Isomerisation von 2,2 - Bis - (3 - allyl - 4 - hydroxyphenyl) - propan

Man wendet die im Beispiel A beschriebene Methode an, fügt dem Reaktionsgemisch nur 250 ml Methanol zu und hält die Isomerisationstemperatur konstant auf 100°C. Unter diesen Reaktionsbedingungen erfolgt die Isomerisationsreaktion aller Allylgruppen in dei Propenylgruppen ausreichend langsam, um die Isomerisationsreaktion bei jedem gewünschten Isomerisationsgrad zu unterbrechen. Der Anteil der im Reaktionsgemisch entstandenen isomeren Propenylverbindungen wird durch H—NMR-spektroskopische Messungen von aus dem Isomerisationsgemisch entnommenen Proben ermittelt.

Nach 13 Minuten beträgt der Anteil an gebildeten isomeren Propenylgruppen 15 Aequivalent-%, bezogen auf die Summe der aequivalente Propenyl- und Aethylgruppen.

Nach 18 Minuten bei 100°C beträgt der Anteil an isomeren Propenylgruppen 21,7 Aequivalent-% und nach 55 Minuten bei 100°C beträgt der Anteil an isomeren Propenylgruppen im Isomerengemisch 50,75 Aequivalent-%.

Beispiel 1 und 2

Herstellung von Glasfaserprepregs

Imprägnierlösungen zur Herstellung von Glasfaserprepregs werden hergestellt, indem man N,N' - 4,4' - Diphenylmethan - bis - (maleinimid) (nachfolgend als Maleinimid I bezeichnet) mit 2,2 - Bis - (3 - allyl - 4 - hydroxyphenyl) - propan (Vergleich 1) oder partiell isomerisiertem 2,2 - Bis - (3 - allyl - 4 - hydroxyphenyl) - propan (Beispiel 1 und 2) in den in Tabelle 1 angegebenen Mengenverhältnissen mischt und solange unter Rühren auf 120°C erhitzt bis die Schmelze eine klare Lösung darstellt. Die Schmelze wird dann noch während der in Tabelle I angegebenen Zeit bei 120°C reagieren gelassen und mit dem in Tabelle I angegebenen Lösungsmittelgemisch zu einer Lösung, enthaltend 70 Gewichts-% Festteile verdünnt. Danach wird die Lösung schnell auf Raumtemperatur abgekühlt.

TABELLE I

| | Vergleich 1 | Beispiel 1 | Beispiel 2 |
|---|---|---|---|
| Bismaleinimid I (Gewichtsteile) | 100 | 100 | 100 |
| 2,2-Bis-(3-allyl-4-hydroxyphenyl)-propan (Gewichtsteile) | 100 | — | — |
| partiell isomerisiertes 2,2-Bis-(3-allyl-4-hydroxyphenyl)-propan (Gewichtsteile) | — | 100 | 100 |
| Gehalt an isomeren Propenylgruppen (Aequivalent-%) | 0 | 21,7 | 50,75 |
| Aethylenglykolmonoäthyläther (Gew.-%) | 32 | 32 | 32 |
| Furfurylalkohol (Gew.-%) | 10 | 10 | 10 |
| Reaktionszeit bei 120°C (Minuten) | 190 | 15 | 0,5 |
| Viskosität bei 25°C (in Pa.s) | 1232 | 682 | 1098 |
| Gelierzeit (Sek). bei 190°C | 170 | 82 | 82 |
| bei 150°C | 490 | 290 | 140 |
| bei 120°C | 1600 | 930 | 350 |
| $F_t/F_{180}$ (%) nach 30 Min. | 21 | 34 | 53,5 |
| 60 Min. | 46,7 | 51,9 | 70,4 |
| 120 Min. | 76,2 | 70,4 | 91,0 |
| 180 Min. | 100 | 100 | 100 |
| $F_t$ = relativer Torsionsmodul zur Zeit t | | | |
| $F_{180}$ = relativer Torsionsmodul nach 180 Min. und Härtung bei 180°C) | | | |
| Interlaminare Scherfestigkeit ASTM* D 2344 ($N/mm^2$) nach Härtung 1 Stunde/170°C | 6,21 | 9,0 | 13,1 |
| 3 Stunden/170°C und 3 Stunden/240°C | 24,77 | 29,6 | 33,9 |

*ASTM = American Society for Testing and Materials

Beispiele 3 bis 7 und Vergleich 2

Maleinimid I, 2,2-Bis-(3-allyl-4-hydroxyphenyl)-propan und 2,2 - Bis - [3 - (1 - propenyl) - 4 - hydroxyphenyl] - propan werden in den in Tabelle 2 angegebenen Menge gut vermischt. Mit einem Teil der jeweiligen Mischung wird die Gelierzeit bei 150°C bestimmt. Mit dem anderen Teil der Mischungen werden gemäss Vorschrift für Messungen mit dem "Twist-o-Meter" (Firma Epprecht, Instruments + Controls, Bassersdorf, CH) Aluminiumzapfen verklebt. Dazu werden die Mischungen unter Rühren auf 120°C erhitzt bis man eine viskose Lösung erhält. Mit der auf Raumtemperatur abgekühlten Lösung werden 5 Verklebungen hergestellt, die dann durch Erhitzen während 3 Stunden auf 145°C, 3 Stunden auf 200°C und 6 Stunden auf 250°C gehärtet werden. Die Ergebnisse der Gelierzeitmessungen und der Torsionsscherfestigkeitsmessungen sind in Tabelle 2 angegeben.

TABELLE 2

| | Vergleich 2 | Bsp. 3 | Bsp. 4 | Bsp. 5 | Bsp. 6 | Bsp. 7 |
|---|---|---|---|---|---|---|
| Maleinimid I (Gewichtsteile) | 100 | 100 | 100 | 100 | 100 | 100 |
| 2,2-Bis-(3-allyl-4-hydroxyphenyl)-propan (Gewichtsteile) | 100 | 98 | 80 | 70 | 60 | 50 |
| 2,2-Bis-[3-(1-propenyl)-4-hydroxyphenyl]-propan (Gewichtsteile) | — | 10 | 20 | 30 | 40 | 50 |
| Gelierzeit bei 150°C (Sekunden) | 300 | 170 | 122 | 85,5 | 76,5 | 60 |
| Torsionsscherfestigkeit ($N/mm^2$) (Twist-o-Meter) | 73,6 | 67,4 | 64,8 | 66,6 | 62,6 | 60,8 |

Beispiel 8

1,0 Mol Maleinimid I und 1,15 Mol partiell isomerisiertes 2,2 - Bis - (3 - allyl - 4 - hydroxyphenyl) - propan mit einem Gehalt an isomeren Propenylgruppen von 15 Aequivalent-% werden bei 120°C zur Schmelze gebracht. Gleichzeitig werden der Schmelze 10 Gewichts-% Furfurylalkohol beigegeben. Die Lösung wird während 30 Minuten vorreagiert. Darauf wird die Lösung auf 60°C abgekühlt und durch Zugabe von Aethylenglykolmonoäthyläther zu einer 60%-igen Lösung verdünnt. Die gewünschte Imprägnierviskosität wird durch Zugabe von wenig Aethylenglykolmonoäthyläther auf 200 mPa.s 25°C eingestellt.

Danach wird diese Lösung zur Imprägnierung eines Glasgewebes mit einem $m^2$-Gewicht von 200 g und Leinenbindung welches als Haftvermittler ein Chrom-III-Methacrylatkomplex der Formel

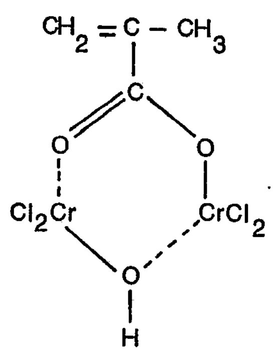

enthält, verwendet. Dazu wird das Glasgewebe im Tauchverfahren bei 25°C imprägniert und danach in einem Umluftofen 8 Minuten lang bei 150°C getrocknet. Anschliessend werden 3 Lagen des imprägnierten Gewebes zwischen zwei 35 Mikron starken Kupferfolien, welche durch oberflächliche elektrolytische Messingbeschichtung vorbehandelt wurden, 1 Stunde bei 170°C heiss verpresst.

Dabei wird die Presse zunächst während 2 Minuten unter leichtem Kontaktdruck gehalten und anschliessend der Druck auf $294.10^4$ $N/m^2$ gesteigert. Die Vorreaktion im Trocknungsofen kann durch eine entsprechend längere Kontaktzeit in der Presse umgangen werden.

Nach einer Stunde wird der Prüfkörper der Presse entnommen und weitere 2 Stunden bei 170°C und 3 Stunden im Ofen bei 240°C nachgehärtet. Man erhält einen zähen, mechanisch hochwertigen, wärmebeständigen Schichtpressstoff, dessen Eigenschaften in Tabelle 3 angegeben sind.

Beispiel 9

Man geht wie im Beispiel 8 beschrieben vor, verwendet jedoch ein partiell isomerisiertes 2,2 - Bis - (3 - allyl - 4 - hydroxyphenyl) - propan mit einem Gehalt an isomeren Propenylgruppen von 21,7 Aequivalent-% und lässt die Lösung während 15 Minuten bei 120°C vorreagieren.

Beispiel 10

Man geht wie im Beispiel 8 beschrieben vor, verwendet jedoch ein partiell isomerisiertes 2,2 - Bis - (3 - allyl - 4 - hydroxyphenyl) - propan mit einem Gehalt an isomeren Propenylgruppen von 50,75 Aequivalent-% und lässt die Lösung während 5 Minuten bei 120°C vorreagieren.

Beispiel 11

1,0 Mol Maleinimid I wird bei 120°C unter Zugabe von 20 Gewichts-% Furfurylalkohol gelöst und noch 5 Minuten bei dieser Temperatur erhitzt. Unmittelbar darauf werden zur Lösung 1,15 Mol 2,2 - Bis - (3 - propenyl - 4 - hydroxyphenyl) - propan zugegeben. Ohne weitere Vorreaktion wird die Lösung auf 60°C gekühlt und durch Zugabe von Aethylenglykolmonoäthyläther zu einer 60%-igen Lösung verdünnt.

Vergleich 3

Man geht wie im Beispiel 8 beschrieben vor, verwendet jedoch reines 2,2 - Bis - 3 - allyl - 4 - hydroxyphenyl) - propan und lässt die Lösung während 190 Minuten bei 120°C vorreagieren.

TABELLE 3

| | Bsp. 8 | Bsp. 9 | Bsp. 10 | Bsp. 11 | Vergleich 3 |
|---|---|---|---|---|---|
| Maleinimid I (Mol) | 1 | 1 | 1 | 1 | 1 |
| 2,2-Bis-(3-allyl-4-hydroxyphenyl)-propan (Mol) | — | — | — | — | 1,15 |
| isomerisiertes 2,2-Bis-(3-allyl-4-hydroxyphenyl)-propan (Mol) | 1,15 | 1,15 | 1,15 | 1,15 | — |
| Gehalt an isomeren Propenylgruppen (Aequivalent-%) | 15 | 21,7 | 50,75 | 100 | — |
| Furfurylalkohol (Gew.-%) | 10 | 10 | 10 | 10 | 10 |
| Aethylenglykolmonoäthyläther (Gew.-%) | 32 | 32 | 32 | 32 | 32 |
| Dauer der Vorreaktion bei 120°C (Min.) | 30 | 15 | 5 | — | 190 |
| Viskosität bei 25°C (mPa.s) | 777 | 682 | 1098 | 3770 | 1232 |
| Gelierzeit bei 190°C (Sekunden) | 84 | 82 | 82 | 65 | 170 |
| 150°C (Sekunden) | 315 | 290 | 140 | 127 | 490 |
| 120°C (Sekunden) | 1160 | 930 | 350 | 231 | 1600 |
| interlaminare Scherfestigkeit ASTM D2344 ($N/mm^2$) nach Abhärtung: 1 Stunde bei 170°C | 7,2 | 9,0 | 13,1 | 17,6 | 6,2 |
| 3 Stunden bei 170°C und 3 Stunden bei 240°C | 25,5 | 29,6 | 33,9 | 26,3 | 24,8 |

**Patentansprüche**

1. Härtbare Mischungen, dadurch gekennzeichnet, dass sie enthalten

a) Maleinimide der allgemeinen Formel I

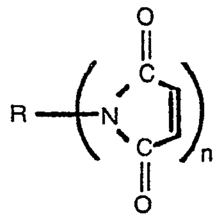

(I)

worin R einen n-wertigen aliphatischen oder aromatischen Rest bedeutet und n für die Zahl 1, 2 oder 3 steht, und

b) ein- oder mehrwertige Phenole, welche im Molekül mindestens eine 1-Propenylgruppe in ortho- oder para-Stellung zur Hydroxylgruppe aufweisen, oder Isomerengemische aus in ortho- oder para-Stellung propenylsubstituierten ein- oder mehrwertigen Phenolen und in ortho- oder para-Stellung allylsubstituierten ein- oder mehrwertigen Phenolen, wobei im Isomerengemisch der Anteil an Propenylgruppen mindestens 5 Aequivalent-%, bezogen auf die Summe der Aequivalente Propenyl- und Allylgruppen, betragen muss und wobei die Mischungen Maleinimide (a) und die propenylsubstituierten Phenole (b) in einem solchen Mengenverhältnis enthalten, dass auf 1 Aequivalent Imidgruppe 0,05 bis 10 Mol der propenylsubstituierten Phenole oder des Isomerengemisches kommen. Isomerengemisches kommen.

2. Mischungen gemäss Anspruch 1, dadurch gekennzeichnet, dass sie Maleinimide der Formel I enthalten, worin R einen ein- oder zweiwertigen aromatischen Rest und n die Zahl 1 oder 2 bedeuten.

3. Mischungen gemäss Anspruch 1, dadurch gekennzeichnet, dass sie Maleinimide der Formel I enthalten, worin R einen unsubstituierten oder durch Methyl substituierten Phenylrest oder einen Rest der Formel

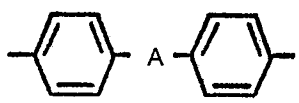

bedeutet, worin A für Isopropylen, Methylen, Sulfonyl, —O— oder —S— steht, und n die Zahl 1 oder 2 bedeutet.

4. Mischungen gemäss Anspruch 1, dadurch gekennzeichnet, dass sie propenylsubstituierte Phenole der Formel II

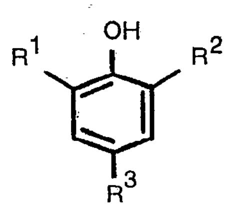

(II)

worin $R^1$, $R^2$ und $R^3$ je ein Wasserstoffatom, Allyl- oder Propenylgruppe bedeuten, wobei mindestens einer der Substituenten $R^1$ bis $R^3$ für die Propenylgruppe steht, der Formel III

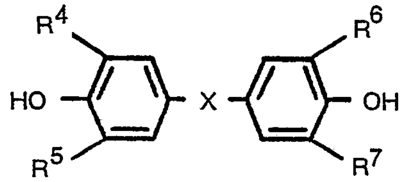

(III)

worin $R^4$, $R^5$, $R^6$ und $R^7$ je ein Wasserstoffatom, Allyl- oder Propenylgruppe bedeuten, wobei mindestens einer der Substituenten $R^4$ bis $R^7$ für die Propenylgruppe steht, und X Isopropylen, Methylen, Sulfonyl, —O— oder —S— bedeutet, oder der Formel IV

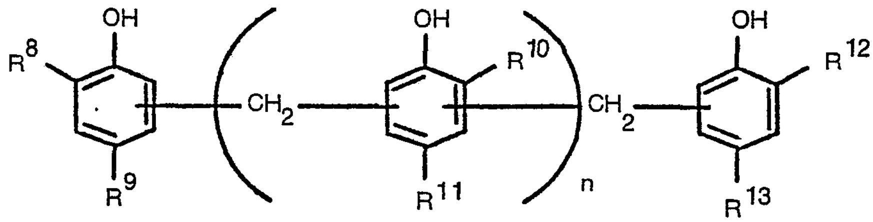 (IV)

worin $R^8$, $R^9$, $R^{10}$, $R^{11}$, $R^{12}$ und $R^{13}$ je ein Wasserstoffatom, Alkyl mit 1 bis 4 C-Atomen, Allyl oder Propenyl stehen, wobei mindestens einer der Substituenten $R^8$ bis $R^{13}$ für die Propenylgruppe steht, und n einen Wert von 0 bis 10 darstellt, enthalten.

5. Mischungen gemäss Anspruch 1, dadurch gekennzeichnet, dass sie als propenylsubstituierte Phenole Verbindungen der Formel

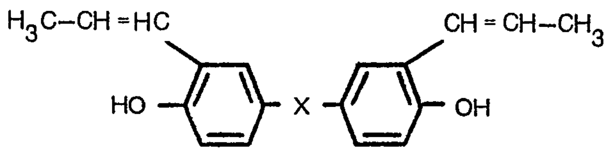

enthalten, worin X für Isopropylen, Methylen oder —O— steht.

6. Mischungen gemäss Anspruch 1, dadurch gekennzeichnet, dass sie als propenylsubstituierte Phenole ein Isomerengemisch aus propenyl- und allylsubstituierten Bis-phenolen enthalten, das durch partielle Isomerisierung von allylsubstituierten Phenolen der Formel

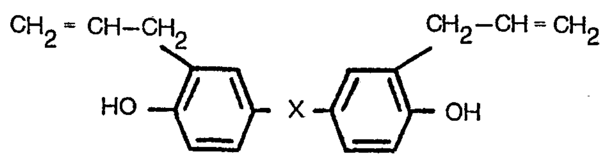

worin X für Isopropylen, Methylen oder —O— steht, erhalten wird.

7. Mehrwertige, propenylsubstituierte Phenole der Gruppe (b) gemäss Anspruch 1.

8. 2,2-Bis-(3-propenyl-4-hydroxyphenyl)-propan als Verbindung gemäss Anspruch 7.

**Claims**

1. A curable mixture which contains

a) maleimides of the general formula I

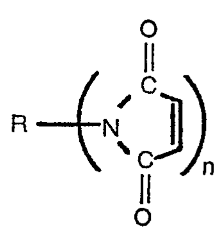 (I)

wherein R is an n-valent aliphatic or aromatic radical, and n is the number 1, 2 or 3; and

b) mono- or polyvalent phenols which contain in the molecule at least one 1-propenyl group in the ortho- or para-position with respect to the hydroxyl group, or isomeric mixtures of mono- or polyvalent phenols which are propenyl-substituted in the ortho- or para-position and mono- or polyvalent phenols which are allyl-substituted in the ortho- or para-position, the proportion of propenyl groups in the isomeric mixture having to be at least 5 equivalent-%, relative to the sum of the equivalents of propenyl and allyl groups, and the mixture having to contain maleimides (a) and the propenyl-substituted phenols (b) in such a quantity ratio that to 1 equivalent of imide group there are 0.05 to 10 mols of the propenyl-substituted phenols or of the isomeric mixture.

2. A mixture according to Claim 1, which contains maleimides of the formula I wherein R is a mono- or bivalent aromatic radical, and n is the number 1 or 2.

3. A mixture according to Claim 1, which contains maleimides of the formula I wherein R is a phenyl group which is unsubstituted or substituted by methyl, or it is a radical of the formula

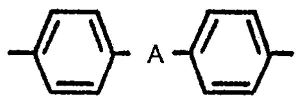

wherein A is isopropylene, methylene, sulfonyl, —O— or —S—, and n is the number 1 or 2.

4. A mixture according to Claim 1, which contains propenyl-substituted phenols of the formula II

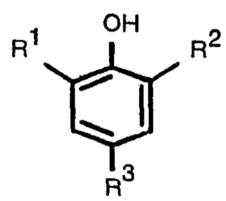

(II)

wherein $R^1$, $R^2$ and $R^3$ are each a hydrogen atom, or an allyl or propenyl group, with at least one of the substituents $R^1$ to $R^3$ being the propenyl group; of the formula III

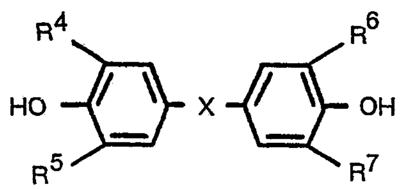

(III)

wherein $R^4$, $R^5$, $R^6$ and $R^7$ are each a hydrogen atom, or an allyl or propenyl group, with at least one of the substituents $R^4$ to $R^7$ being the propenyl group, and X being isopropylene, methylene, sulfonyl, —O— or —S—; or of the formula IV

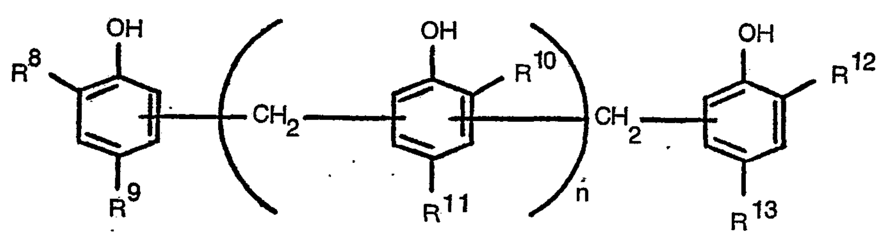

(IV)

wherein $R^8$, $R^9$, $R^{10}$, $R^{11}$, $R^{12}$ and $R^{13}$ are each a hydrogen atom, alkyl having 1 to 4 C atoms, allyl or propenyl, with at least one of the substituents $R^8$ to $R^{13}$ being the propenyl group, and n denoting a value from 0 to 10 inclusive.

5. A mixture according to Claim 1, which contains, as propenyl-substituted phenols, compounds of the formula

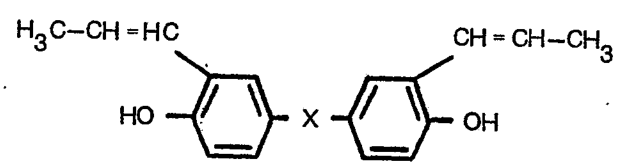

wherein X is isopropylene, methylene or —O—.

6. A mixture according to Claim 1, which contains, as propenyl-substituted phenols, an isomeric mixture of propenyl- and allyl-substituted bis-phenols, which mixture is obtained by partial isomerisation of allyl-substituted phenols of the formula

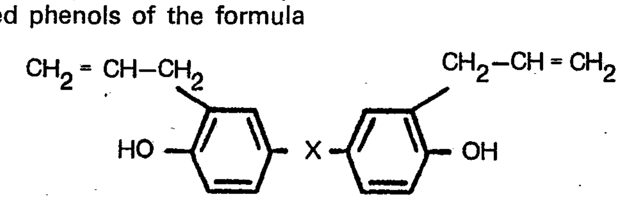

wherein X is isopropylene, methylene or —O—.

7. Polyvalent, propenyl-substituted phenols of the group (b) according to Claim 1.
8. 2,2-Bis-(3-propenyl-4-hydroxyphenyl)-propane as compound according to Claim 7.

**Revendications**

1. Mélanges durcissables caractérisés en qu'ils contiennent:
a) des maléimides répondant à la formule générale I

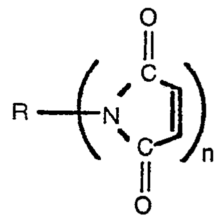

(I)

dans laquelle R représente un radical aliphatique ou aromatique de valence égaleà n et n représente l'un des nombres 1, 2 et 3, et

b) des monophénols ou des polyphénols dont la molécule porte au moins un radical propène-1 yle en position ortho ou para relativement au groupe hydroxy, ou des mélanges d'isomères constitués de monophénols ou polyphénols portant un radical propène-1 yle en ortho ou en para et de monophénols ou polyphénols portant un radical allyle en ortho ou en para, la proportion des radicaux propène-1 yles dans le mélange d'isomères devant être d'au moins 5% en équivalents par rapport à la somme des équivalents des radicaux propène-1 yles et allyles, et les mélanges contenant les maléimides (a) et les propényl-phénols (b) en un rapport de quantités tel qu'il ait, pour un équivalent de radical imido, de 0,05 à 10 moles, des propénylphénols ou du mélange d'isomères.

2. Mélanges selon la revendication 1, caractérisés en ce qu'ils contiennent des maléimides de formule I dans lesquels R représente un radical aromatique univalent ou bivalent et n représente le nombre 1 ou le nombre 2.

3. Mélanges selon la revendication 1, caractérisés en ce qu'ils contiennent des maléimides de formule I dans lesquels R représente un radical phényle non substitué ou porteur d'un radical méthyle ou représente un radical répondant à la formule:

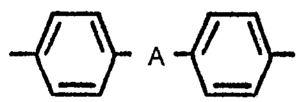

dans laquelle A représente un radical isopropylène, méthylène, sulfonyle, —O— ou —S— et n désigne le nombre 1 ou le nombre 2.

4. Mélanges selon la revendication 1, caractérisés en ce qu'ils contiennent des propénylphénols répondant à la formule II:

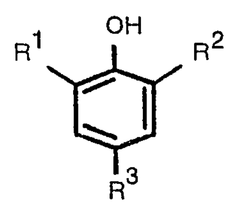

(II)

dans laquelle, $R^1$, $R^2$ et $R^3$ représentent chacun un atome d'hydrogène, un radical allyle ou un radical propène-1 yle, au moins un des substituants $R^1$ à $R^3$ étant un radical propène-1 yle, ou répondant à la formule III:

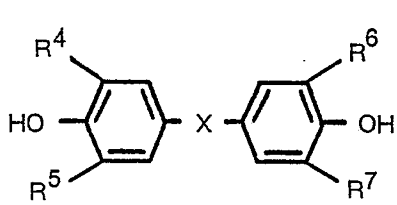

(III)

dans laquelle $R^4$, $R^5$, $R^6$ et $R^7$ représentent chacun un atome d'hydrogène, un radical allyle ou un radical propène-1 yle, au moins un des substituants $R^4$ à $R^7$ représentant le radical propène-1 yle, et X

représente un radical isopropylène, méthylène, sulfonyle, —O— ou —S—, ou répondant à la formule IV:

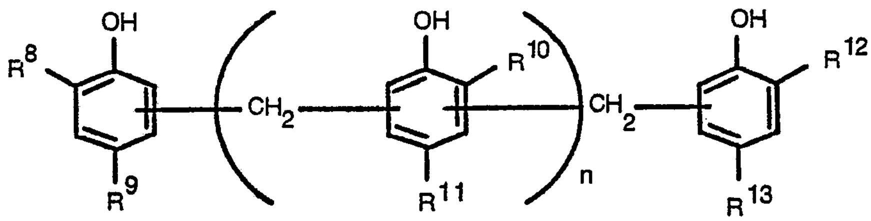

(IV)

dans laquelle $R^8$, $R^9$, $R^{10}$, $R^{11}$, $R^{12}$ et $R^{13}$ représentent chacun un atome d'hydrogène, un radical alkyle renfermant de 1 à 4 atomes de carbone, un radical allyle ou un radical propène-1 yle, au moins un des substituants $R^8$ à $R^{13}$ étant un radical propène-1 yle, et n représente un nombre de 0 à 10.

5. Mélanges selon la revendication 1, caractérisés en ce qu'ils contiennent, comme propénylphénols, des composés répondant à la formule:

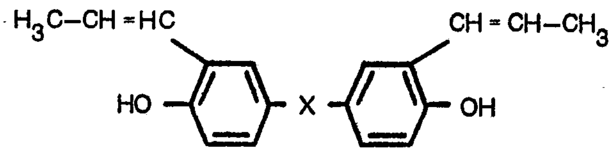

dans laquelle X représente un radical isopropylène, méthylène, ou —O—.

6. Mélanges selon la revendication 1, caractérisés en ce qu'ils contiennent, comme propénylphénols, un mélange d'isomères constitué de (propène-1 yl)-bisphénols et d'allyl-bisphénols qui est obtenu par isomérisation partielle d'allylphénols répondant à la formule:

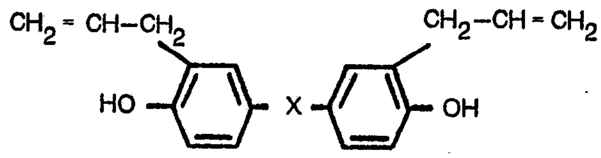

dans laquelle X représente un radical isopropylène, méthylène ou —O—.

7. Propényl-polyphénols du groupe (b) selon la revendication 1.

8. Composé selon la revendication 7, en l'espèce le bis-[(propényl)-3 hydroxy-4 phényl]-2,2 propane.